# EUROPEAN PATENT APPLICATION

(11) **EP 4 803 918 A1**
(43) Date of publication of application: **09.09.2026**
(21) Application number: 25161880.7
(22) Date of filing: 05.03.2025
(51) Int. Cl.: G01S 3/808, G01S 5/20

(54) **SIREN DETECTION AND LOCALIZATION BASED ON SOUND SIGNALS ACQUIRED BY VEHICLE MICROPHONES MODULES**

(71) Applicant: Valeo Telematik Und Akustik GmbH, 61381 Friedrichsdorf (DE)
(72) Inventor: GOLI, Peyman, 94000 Créteil (FR); KLOSE, Michael, 94000 Créteil (FR)
(74) Representative: Delaval, Guillaume Laurent

(57) **Abstract**

The disclosure notably relates to a computer-implemented method for detecting and localizing sirens based on sound signals. Each sound signal represents a sound acquired at a same time frame by a respective microphone of a vehicle. The vehicle comprises at least two microphone modules. Each microphone module comprises several microphones. The method comprises, for each microphone module, by a local processing function, removing noise in the sound signals acquired by the microphones of the module and performing siren detection and localization based on the sound signals acquired by the microphones of the modules. The method further comprises applying a global processing function to the siren detection and localization results outputted by the local processing function for all microphone modules. The global processing function is configured for siren detection and localization based on the results outputted by the local processing function.

## Description

### TECHNICAL FIELD

The disclosure relates to the field of computer programs and systems, and more specifically to methods, systems, programs and a neural network for siren detection and localization based on sound signals acquired by vehicle microphone modules.

### BACKGROUND

Siren detection and localization refers to the joint task of 1) detecting, in sound signals acquired by vehicle on-board exterior microphones, whether the sound is or includes a siren sound, and 2) localizing (estimating a localization) of the siren based on these sounds. Accurately detecting and localizing siren sounds in diverse and noisy environments using vehicles with varying shapes and sizes is challenging. Traditional sound source localization systems struggle with wind noise, road noise, engine noise, and poor performance in adverse conditions. Additionally, the lack of flexibility and scalability in microphone arrays, coupled with the poor generalization of machine learning algorithms to unseen microphone configurations and vehicle dimensions, results in reduced accuracy for siren localization.

Within this context, there is a need for improved solutions for siren detection and localization based on sound signals acquired by vehicle microphone modules.

### SUMMARY

It is therefore provided a computer-implemented method for detecting and localizing sirens based on sound signals. Each sound signal represents a sound acquired at a same time frame by a respective microphone of a vehicle. The vehicle comprises at least two microphone modules. Each microphone module comprises several microphones. The method comprises, for each microphone module, by a local processing function, removing noise in the sound signals acquired by the microphones of the module and performing siren detection and localization based on the sound signals acquired by the microphones of the modules. The method further comprises applying a global processing function to the siren detection and localization results outputted by the local processing function for all microphone modules. The global processing function is configured for siren detection and localization based on the results outputted by the local processing function. The method may be referred to as the detection and localization method.

The local processing function may compute, for each microphone module, a probability of joint siren signal presence and direction of arrival of a siren sound based on the sound signals of the microphones of the module. The probability is zero lower than a predefined threshold in the absence of a siren sound and represents a distribution of probabilities across azimuth angles in the presence of a siren sound.

The global processing function may detect a siren sound and localize a siren by combining the probabilities of joint signal presence and direction of arrival of a siren sound computed for the microphone modules.

The global processing function may detect and localize a siren sound by computing an average of the probabilities of joint siren signal presence and direction of arrival of a siren sound computed for the microphone modules.

The average may be a weighted average where each probability of joint siren signal presence and direction of arrival has a weight that depends decreasingly on its amplitude. Alternatively, the average may be a weighted average where each probability of joint siren signal presence and direction of arrival has a weight that depends increasingly on its amplitude.

Prior to applying the global processing function, the method may further comprise adjusting each probability of joint siren signal presence and direction of arrival computed for a respective microphone module based on a position and orientation of the microphone module.

The local processing function may comprise a Deep Neural Network (DNN). The DNN is configured to take as input, for a given microphone module, a narrow-band Fourier transform based on the sound signals acquired by the microphones of the given microphone module. The DNN is configured to remove noise in the sound signals of the microphones of the given module and output the probability of joint siren signal presence and direction of arrival of a siren sound.

The DNN may take as input 3D input structure corresponding to a microphone module and formed by:
- the narrow-band Fourier transforms of the sound signals acquired by the microphones of the module at said same time frame;
- the narrow-band Fourier transforms of the sound signals acquired by the microphones of the module at one or more previous time frames; and
- the narrow-band Fourier transforms of the sound signals acquired by the microphones of the module at one or more next time frames.

It is also proposed a computer-implemented method of machine-learning, for training the DNN. This method may be referred to as "the learning method". The learning method comprises providing a training dataset of training examples. Each training example comprises a narrow-band Fourier transform based on the sound signals acquired by the microphones of a given microphone module of a vehicle in the presence of background noises and interfering sound sources. The training example also comprises a probability of joint siren signal presence and direction of arrival of a siren sound for the sound signals of the given microphone module. The probability is zero or lower than a threshold in the absence of a siren sound and represents a distribution of probabilities across azimuth angles in the presence of a siren sound. The learning method further comprises training the DNN based on the training dataset. The training comprises minimizing a loss. The loss penalizes, for each training example, a disparity. The disparity is the probability of joint siren signal presence and direction of arrival of a siren sound for the training example and a probability of joint siren signal presence and direction of arrival of a siren sound outputted by the DNN based on a narrow-band Fourier transform of the training example.

It is also provided a DNN obtainable according to the learning method (*i.e*. having the same weights and architecture as a DNN trained by the learning method), for example a DNN obtained according to the learning method (*i.e*. the exact DNN that results from the learning method, with its weights/parameters set by the training according to the training method.

It is further provided a computer program comprising instructions for performing the detection and localization method and/or the learning method.

It is further provided a computer data readable storage medium having recorded thereon the computer program and/or the DNN.

It is further provided a computer system comprising a processor coupled to a memory, the memory having recorded thereon the computer program and/or the DNN.

It is further provided a device comprising a data storage medium having recorded thereon the computer program and/or the neural network.

The device may form or serve as a non-transitory computer-readable medium, for example on a SaaS (Software as a service) or other server, or a cloud based platform, or the like. The device may alternatively comprise a processor coupled to the data storage medium. The device may thus form a computer system in whole or in part (*e.g*. the device is a subsystem of the overall system). The system may further comprise a graphical user interface coupled to the processor.

The computer system may be a vehicle on-board computer system coupled with microphones of the vehicle.

It is also provided a vehicle equipped with the computer system.

### BRIEF DESCRIPTION OF THE DRAWINGS

Non-limiting examples will now be described in reference to the accompanying drawings, where:
- FIG.s 1 to 7 illustrate the methods; and

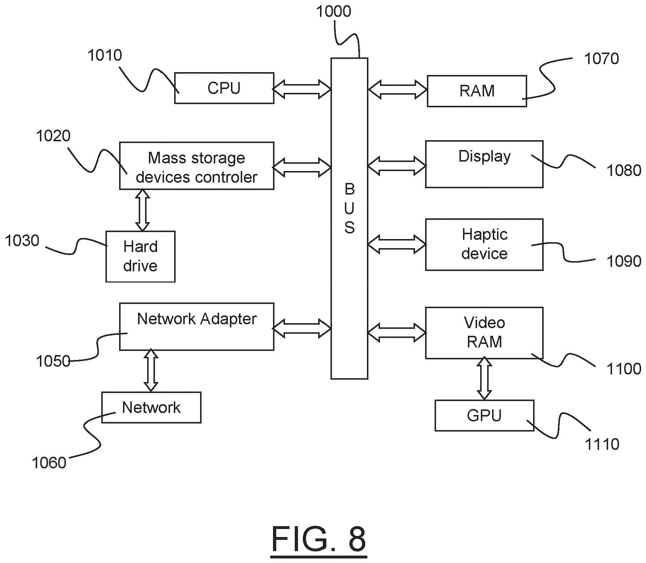

- FIG. 8 shows an example of the system.

### DETAILED DESCRIPTION

It is provided a computer-implemented method for detecting and localizing sirens based on sound signals. Each sound signal represents a sound acquired at a same time frame by a respective microphone of a vehicle. The vehicle comprises at least two microphone modules. Each microphone module comprises several microphones. The method comprises, for each microphone module, by a local processing function, removing noise in the sound signals acquired by the microphones of the module and performing siren detection and localization based on the sound signals acquired by the microphones of the modules (*i.e*. for each microphone module, by a local processing function, performing siren detection and localization while inherently removing background noise, based on the sound signals acquired by the microphones of the modules). The method further comprises applying a global processing function to the siren detection and localization results outputted by the local processing function for all microphone modules. The global processing function is configured for siren detection and localization based on the results outputted by the local processing function. As previously said, the method may be referred to as the detection and localization method.

The detection and localization method constitutes an improved solution for siren detection and localization based on sound signals acquired by vehicle microphone modules.

Notably, the method allows deployment of a modular and scalable architecture, where multiple independent microphone array modules may be deployed across different vehicle zones. This modularity allows for flexible configurations, ensuring full-azimuth coverage and adaptable deployment for various vehicle types and shapes. The microphone arrays can be reconfigured in terms of the number, arrangement, and spacing of microphones. This adaptability allows the system to optimize performance for different environments, making it suitable for diverse deployment needs in vehicles. The microphone configuration may be customized for different vehicles and environments, providing a more application-specific solution for automotive emergency detection and localization. This is enabled by the method using a local processing function for siren detection and localization for each microphone module, *i.e*. the sound signals acquired by each microphone module are each processed independently by a local processing function, and then performing a global processing. The global processing function indeed combines the outputs of all microphone modules, leveraging spatial and temporal correlations based on the geometric configuration of the vehicle. This results in highly accurate and reliable localization across the entire azimuth range.

Furthermore, as further discussed hereinafter, the local processing may be done by a DNN. The joint detection and localization process thus leverages deep neural networks (DNN) to improve accuracy in identifying emergency sirens specifically, which is advantageous for applications like automotive siren detection. Using a Deep Neural Network (DNN) for joint siren detection and localization, enables to learn complex patterns and features in siren sounds, even in noisy environments (e.g., road noise, wind, engine sounds). Conventional methods, such as traditional signal processing and beamforming techniques, typically rely on predefined filters or models that struggle to maintain high detection and localization accuracy in real-world, dynamic conditions (e.g., vehicles moving at high speeds). These methods may not generalize well to varying noise types or changing environmental conditions, leading to higher false positives or localization errors. Furthermore, the DNN can adapt to a wide range of acoustic conditions, offering higher accuracy by effectively separating siren sounds from background noise, making it much more robust compared to conventional approaches. The DNN-based model and approach of the present disclosure thus offers robustness against challenging acoustic conditions, including strong wind, road noise, and reverberation.

Furthermore, the DNN-based model and approach of the present disclosure offers exceptional flexibility in handling varying microphone module positions and vehicle dimensions without requiring retraining. The model adapts seamlessly to new geometric configurations due to its design. The DNN of the local processing unit is trained for detection and localization independently of vehicle-specific properties. The global processing unit then refines and adjusts the DoA (direction of arrival) estimates from the local processing units using the geometric information of the microphone modules and the vehicle dimensions. This flexibility arises from the training approach employed for the local processing of the microphone modules. Specifically, audio signals are generated (using for example a simulation model) for the microphones in a module based on their configuration and various directions of arrival within a full azimuth angle range. Using this training (e.g. simulated) data, the DNN of the local processing unit is trained to jointly detect and localize sirens, independent of the module's position on the vehicle or the vehicle's dimensions. Once the microphone modules are installed in various zones on the vehicle, the global processing unit integrates the positional information of the microphone modules and the vehicle's dimensions with the localization data estimated by the local processing units. This allows the system to accurately predict the true direction of arrival (DoA).

In a practical application, a vehicle equipped with the on-board system implementing the proposed method utilizes four microphone modules, positioned in strategic zones: the front and rear bumpers (aligned parallel to the vehicle axis, i.e., horizontally mounted) and the left and right side mirrors (perpendicular to the vehicle axis, i.e., vertically mounted). Each module consists of a small array of three microphones arranged in a zigzag pattern with 0.05 cm spacing. Upon initialization, the local DNN-based processing units in each module begin capturing acoustic data, including siren sounds and background noise like wind and road noises. The DNNs then process the signals to estimate the direction of arrival (DoA) of the siren source. The probability density functions for joint detection and localization (i.e., likelihood of azimuth angles) from the modules are sent to a to a Global processing unit. This unit employs weighted averaging techniques, incorporating the positional geometry of the microphone modules relative to the vehicle axis, to deliver an overall estimation of siren presence and the DoA of the detected siren relative to the vehicle. In high-speed situations, the local processing system further enhances detection accuracy, maintaining reliable siren localization performance. The system dynamically adapts to changes in vehicle shape, environment, and noise levels, continuing to function effectively even in adverse acoustic environments.

The detection and localization method is for detecting and localizing sirens based on sound signals. This means that the method processes sound signals to obtain two results: 1) determination of whether there is a siren sound in these signals, and 2) if there is, localize the siren based on the signals. The local processing unit, and notably its DNN, proposed in this disclosure for joint siren detection and localization inherently reduces background noise and interference, enhancing the accuracy of detection and localization (the noise being however removed by this unit, *e.g.* in the first layers of the DNN). All sound signals are relative to a same time frame, *i.e*. they each represent a respective sound acquired by a respective microphone of the vehicle, but each sound is acquired during the said same time frame. Each signal is thus acquired by one respective microphone of the vehicle (*i.e*. there is one signal per microphone of the vehicle). The vehicle comprises several microphones (at least two), which are distributed in microphone modules, also referred to as "microphone arrays" or "microphone array modules". A microphone module is a microphone system comprising several microphones (*e.g*. 3 per module) arranged close to one another. Each microphone is a vehicle exterior microphone, and may be any exterior microphone model known in the art. A sound signal may also be referred to as "audio signal". The vehicle may be any type of land vehicle such as a car, a bus, a truck, or a motorbike.

As outlined above, the method is performed for a time frame. In other words, the microphones acquire sound signals (one per microphone) during the same time frame. Each signal is thus a discrete time series of values, where each value corresponds to a specific time within the time frame and represents an amplitude of the sound acquired by the respective microphone at that time. The amplitude may be an air pressure or a voltage. To process the signals, the time frame may be divided into overlapping intervals *Tᵢ =* [*tᵢ*, *tᵢ + T*]*,,* where *tᵢ* is the starting sample of the *i-th* time frame, and *T* is the duration of the frame. For a given microphone *M*, the signal may be mathematically represented as *x_{M} =* (*x*_{*T*1}, *x*_{*T*2} *...* , *x_{Tn}*), where *Tᵢ* denotes the *i-th* time interval. The signals may be further processed using a windowing function, applied to each time frame to mitigate spectral leakage during subsequent analysis. The overlapping of intervals ensures continuity and effective segmentation for analysis. The method processes the signals for all microphones for this time frame. It is to be understood that the method may be repeated for several (*e.g*. consecutive time frames). In particular the method may be performed in real-time during a travel of the vehicle, where continuously (regularly) the microphones provide sound signals corresponding to successive time frames. The vehicle may travel at speed such that a signal to wind noise ratio (*i.e.* for the signals considered in the methods) is smaller than -20 decibels, which corresponds to a high speed. Signal-to-noise ratio (also referred to as SNR or S/N) is a measure that compares the level of a desired signal to the level of background noise. SNR is defined as the ratio of signal power to noise power (here wind noise), often expressed in decibels. A ratio higher than 1:1 (greater than 0 dB) indicates more signal than noise. The method thus handles situations, typically high-speed situations, where wind noise is so significant that the signal to noise ratio is smaller than -20 decibels.

Any sound signal herein (in the detection and localization method and in the learning method) includes a siren sound, except for example when the detection and localization method is applied to a time frame where the sounds acquired by the microphones do not include a siren sound (because there is no siren) or for example in some training examples in the learning method (referred to as "negative examples" hereinafter).

The method comprises, for each microphone module, by a local processing function (performing inherent background noise reduction as well as siren detection and localization based on the sound signals acquired by the microphones of the modules), removing noise in the sound signals acquired by the microphones of the module and performing siren detection and localization based on the sound signals acquired by the microphones of the modules. This means that the method, for each microphone module, processes together the sound signals acquired by the microphones of the module by determining whether they correspond to a siren sound while inherently reducing background noise (e.g. wind noise, road noise, or other interferences) across all microphone signals within the module. If a siren is detected, the method localizes the siren. These tasks are performed by the local processing function. It is to be understood that there may be a single local processing function which performs this processing for all the modules, *e.g.* one by one (*i.e.* the local processing function is applied successfully to each group of sound signals corresponding to each microphone module). Alternatively, there may be one respective local processing function attributed to each module, which processes the sound signals of this module only. Thus, there are several local processing functions, one per module. The local processing functions may however be identical, *i.e*. copies or identical instances of a same local processing function. Thus, to simplify, the present disclosure may refer to any of these functions as "the local processing function", since they are all identical. In this case, the processing of all the groups of sound signals corresponding to all modules may be performed in parallel, using any suitable parallel computation hardware architecture.

The local processing function may compute, for each microphone module, a probability of joint siren signal presence and direction of arrival of a siren sound based on the sound signals of the microphones of the module. The probability may be zero in the absence of a siren sound. Alternatively, in the absence of a siren sound, all DoA probabilities across azimuth angles may be below a predefined threshold (*i.e*. if the distribution of probabilities across azimuth angles is lower than a predefined threshold, this means absence of a siren sound). On the other hand, If of at least one DoA probability exceeds the threshold, a siren signal is detected. In the presence of a siren sound, the probability represents a distribution of probabilities across azimuth angles, *i.e.* for each azimuth angle (*e.g.* of a sampling of all possible azimuth angles, or of all possible integer values of azimuth angle) the distribution comprises a probability value which represents a probability that the siren sound stems from that azimuth angle.

The method then comprises applying a global processing function to the siren detection and localization results outputted by the local processing function for all microphone modules (*e.g*. to the probabilities estimated by the local processing units). The global processing function is configured for siren detection and localization based on the results outputted by the local processing function. For example, the global processing function may detect and localize a siren sound by combining the probabilities of joint signal presence and direction of arrival of a siren sound computed for all the microphone modules by the local processing function.

The global processing function may detect and localize a siren sound by computing an average of the probabilities of joint siren signal presence and direction of arrival of a siren sound computed for the microphone modules. In other words, the global processing function computes a probability which is an average of all the probabilities outputted by the local processing functions for all the microphone modules. If the probabilities across all azimuth angles are below the predefined threshold or equal zero (indicating that the average of all probabilities outputted by the local processing function are below the threshold or equal zero), it means that no siren is detected.

The function may thus output a probability below the predefined threshold and/or an indication that no siren is detected. If the output exceeds the threshold, i.e., a siren is detected, the global function computes a distribution of probabilities across azimuth angles. This distribution is the average of all the distributions computed for all the microphone modules, utilizing different weighting methods.. In this case the function may output any indication that a siren is detected as well as its direction (*e.g*. the most probable(s) azimuth angles). The average may be a weighted average where each probability of joint siren signal presence and direction of arrival has a weight that depends decreasingly on its amplitude, as further discussed hereinafter. This weighting allows to reduce false positives. The average may alternatively be a weighted average where each probability of joint siren signal presence and direction of arrival has a weight that depends increasingly on its amplitude, as further discussed hereinafter. In challenging acoustic environments, such as those with background noise and reverberation, the MAX likelihood of the estimated DoA (direction of arrival) may decrease, indicating lower reliability. This is accounted for by this weighting.

The method may further comprise, prior to applying the global processing function, adjusting each probability of joint siren signal presence and direction of arrival computed for a (*i.e.* each) respective microphone module based on a position and orientation of the microphone module. For example, each estimated local DoA (direction of arrival) may be adjusted (rolled or shifted) based on the position and orientation of the microphone module in its respective zone. This alignment accounts for the directional placement of each microphone, ensuring consistent DoA representation across zones. This adjustment may be done by a pre-processing module of the global processing function.

After alignment, for siren detection, each local DoA may be weighted according to its maximum (MAX) likelihood value. To reduce false positives, which are common in event detection, the local DoA with the lowest MAX value receives the highest weight (for example 1), while the local DoA with the highest MAX value receives the lowest weight (for example 0.5). After calculating the weighted average of these DoAs, the system may detect a siren if the maximum value of the global DoA exceeds a set threshold.

To compute siren localization, in the second average, local DoAs with higher MAX values may be given higher weights, while those with lower MAX values receive lower weights. The global DoA may be then determined as the weighted average of these local DoAs, and the predicted azimuth angle corresponds to the argument of the MAX value of this global DoA. In challenging acoustic environments, such as those with background noise and reverberation, the MAX likelihood of the estimated DoA may decrease, indicating lower reliability. This is accounted for by this weighting.

The local processing function may comprise a Deep Neural Network (DNN), as previously said. The DNN is configured to (*i.e.* has an architecture adapted to and is trained to) take as input, for a given microphone module, a narrow-band Fourier transform based on the sound signals acquired by the microphones of the given microphone module. In other words, the input of the DNN is always respective to a microphone module, and the input corresponds to narrow-band Fourier transform data based on the sound signals acquired by the microphones of that module. The DNN is further configured to remove noise in the sound signals of the microphones of the given module and output the probability of joint siren signal presence and direction of arrival of a siren sound.

The concept of narrow band Fourier transform, although well-known, is now defined for completeness. Let *x*(*t*) be a sound signal, which in the present disclosure is acquired by a vehicle microphone, and 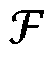 {*x*(*t*)}(*f*) its Fourier transform at frequency *f*. The Fourier transform is given by the formula: $F \left\{x\left(t\right)\right\} \left(f\right) = {\int }_{- ∞}^{+ ∞} x \left(t\right) {e}^{- 2 πjft} dt .$ Assume now that the signal has a dominant frequency *f*ₒ, and let *ω*(*f - f*₀) be a window function in frequency domain around frequency *f*₀. Then the narrow-band Fourier transform of *x*(*t*) around *f*₀ is given by ${F}_{nb} \left\{x\left(t\right)\right\} \left(f\right) = {\int }_{- ∞}^{+ ∞} x \left(t\right) {e}^{- 2 πjft} ω \left(f-{f}_{0}\right) dt .$ Alternatively, the term *ω*(*f - f*₀) may be taken out of the above integral, *i.e.* the window is applied in the frequency domain after computing the Fourier Transform.

Due to the periodic nature of siren signals, they typically exhibit a main formant (i.e., a frequency containing the highest energy of the signal) and several sub-formants. Depending on the type of siren-varying across countries and used by emergency vehicles, such as High-Low, Wail, Yelp, Sting, etc.-the main and sub-formants differ. However, these critical frequency components generally fall within the range of 200 Hz to 2 kHz. To concentrate on this frequency range, the method may apply a filter to restrict the input to the Deep Neural Network (DNN) to this specific band (the local processing unit maty comprise a module to apply this filter), allowing the DNN to identify and estimate the siren signal patterns based on these key frequency components. Since the formants of various siren signals are almost uniformly distributed within this range, a rectangular window may be used for *ω* in the frequency domain to focus on the target band. Thus, the window may be a rectangular window function defined by: $ω \left(f-{f}_{0}\right) = \left\{\begin{matrix}1 if 200 Hz < f - {f}_{0} < 2000 Hz and {f}_{0} = 1000 Hz \\ 0 otherwise\end{matrix}\right.$

During each time frame, every sound signal that includes a siren exhibits a dominant frequency, typically corresponding to the main formant containing the highest energy. The local processing function may comprise a pre-processing module which isolates this dominant frequency (*i.e.* during each given frame), *i.e.* for each signal of each microphone of each module, and then computes the narrow-band Fourier transforms of all these signals. Here again, this preprocessing may be done in parallel for all the microphone modules. Isolating the dominant frequency may be performed using any known method suitable for this, including using the Fourier transform (FFT for example) the Hilbert transform, or the Wavelet transform, Autocorrelation method, Zero-crossing method, or Peak detection method.

The DNN may take as input a 3D input structure corresponding to a microphone module (*i.e*. the 3D input is respective to one microphone module) and formed by:
- the narrow-band Fourier transforms of the sound signals acquired by the microphones of the module at said same time frame;
- the narrow-band Fourier transforms of the sound signals acquired by the microphones of the module at one or more previous time frames; and
- the narrow-band Fourier transforms of the sound signals acquired by the microphones of the module at one or more next time frames.

The 3D input structure may also be referred to as "3D input feature". The narrow-band Fourier transforms of the sound signal acquired by the microphones at the previous time frame(s) may consist in the narrow-band Fourier transforms of the sound signals acquired by the microphones during the two previous time frames. The narrow-band Fourier transforms of the sound signals acquired by the microphones at the next time frame(s) may consist in the narrow-band Fourier transforms of the sound signals acquired by the microphones during the two next time frames.

Each microphone module may comprise the same number of microphones *Nₘ*, *i.e.* all the microphone modules have the same number of microphones *Nₘ. Nₘ* may equal 3, *i.e.* all modules have 3 microphones each. The input structure may be a 3D input structure of size (*N_{c}, N_{b}*, 2*Nₘ*). The number *N_{c}* corresponds to the number of frames considered. This number may equal 5 in implementations: 1 current frame (*i.e.* the frame corresponding to said same time), 2 frames corresponding to the two previous times, and two frames corresponding to the two next times. However, this parameter *N_{c}* may be modified, for example to be adjusted based on a desired run speed and system memory. *N_{b}* is the number of frequency bins for the Fourier transform. *N_{b}* may for example equal 205 and/or the frequency bins may range from 299.9 Hz to 2.685 kHz. The number 2 corresponds to the fact that the Fourier transform has two parts: a real part and an imaginary part. In other words, for each microphone module, the 3D input feature is formed by, for each microphone of the *Nₘ* microphones in the module:
- a vector encoding the real part of the narrow-band Fourier transform (distributed over the *N_{b}* frequency bins) of the signal acquired by the microphone during said time frame;
- a vector encoding the imaginary part of the narrow-band Fourier transform (distributed over the *N_{b}* frequency bins) of the signal acquired by the microphone during said time frame;
- a vector encoding the real part of the narrow-band Fourier transform (distributed over the *N_{b}* frequency bins) of the signal acquired by the microphone during the previous time frame;
- a vector encoding the imaginary part of the narrow-band Fourier transform (distributed over the *N_{b}* frequency bins) of the signal acquired by the microphone during the previous time frame;
- a vector encoding the real part of the narrow-band Fourier transform (distributed over the *N_{b}* frequency bins) of the signal acquired by the microphone during the time frame previous to said previous time frame;
- a vector encoding the imaginary part of the narrow-band Fourier transform (distributed over the *N_{b}* frequency bins) of the signal acquired by the microphone during the time frame previous to said previous time frame;
- a vector encoding the real part of the narrow-band Fourier transform (distributed over the *N_{b}* frequency bins) of the signal acquired by the microphone during the next time frame;
- a vector encoding the imaginary part of the narrow-band Fourier transform (distributed over the *N_{b}* frequency bins) of the signal acquired by the microphone during the time frame next to said next time frame.

The local processing function may comprise a pre-processing module as previously discussed, and this module may comprise, for each current time frame to which the method is applies, computing the above described 3D input structure, including isolating the dominant frequency in all signals of all frames (past, current, future) for all microphones, computing the corresponding narrow-band Fourier transforms, and forming the 3D input structure.

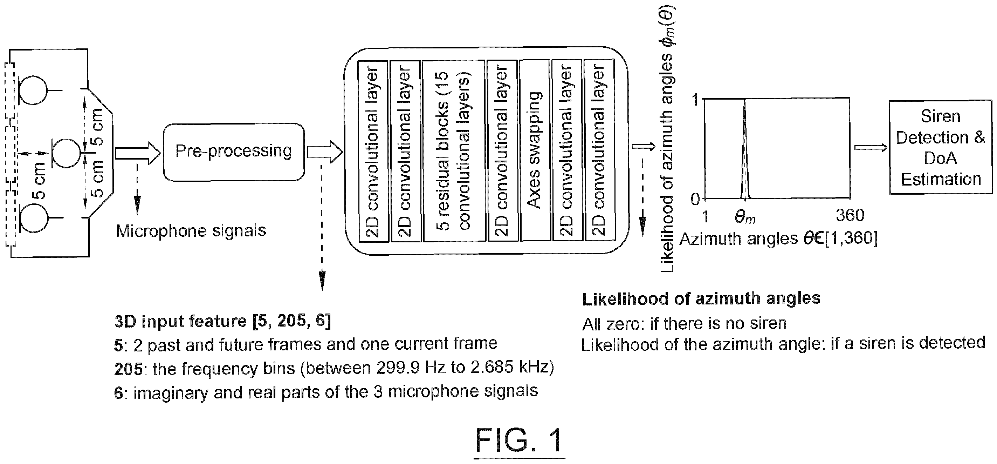

The DNN may have a full CNN architecture, consisting for example of two consecutive 2D convolutional layers, followed by 5 residual blocks (each of 3 convolutional layers), followed by a 2D convolutional layer, followed by an axes swapping layer/unit unit to transform the convolution domain from the time-frequency domain to the time-direction domain, followed by two consecutive 2D convolutional layers. FIG. 1 illustrates an implementation of the architecture of the DNN. The pre-processing is also illustrated, as well as the result. As shown in the figure, the output result is a probability which is constant zero if there is no siren detected, and which is a distribution of a likelihood over azimuth angles otherwise. The Axes Swapping unit is used to transform the convolution domain from the time-frequency domain to the time-direction domain. Before this unit, convolutions are applied locally in the time-frequency domain and globally on the estimated directions (i.e., rows: time, columns: frequency, depth: estimated direction). By swapping the columns and depth of the 3D matrix, subsequent convolutions are then applied locally in the time-direction domain.

It is also proposed a computer-implemented method of machine-learning, for training the DNN. This method may be referred to as "the learning method", as previously said.

The learning method is a method of machine-learning of a model, which is the DNN in the present disclosure. As known *per se* from the field of machine-learning, the processing of an input by a model includes applying operations to the input, the operations being defined by data including weight values or parameters. Learning a model (*e.g.* a neural network or a regressor) thus includes determining values of the weights/parameters based on a dataset configured for such learning, such a dataset being possibly referred to as a learning dataset or a training dataset. For that, the dataset includes data pieces each forming a respective training sample or training example. The training samples/examples represent the diversity of the situations where the model is to be used after being learnt. Any training dataset herein may comprise a number of training samples/examples higher than 1000, 10000, 100000, or 1000000. In the context of the present disclosure, by "learning a model based on a dataset", it is meant that the dataset is a learning/training dataset of the model, based on which the values of the weights/parameters are set. In the present disclosure, the training dataset is the dataset of training examples, on which the DNN is trained.

As known *per se* from machine-learning, a neural network may be defined by its architecture, parameters, and hyperparameters. The architecture consists of layers, starting with the input layer whose neuron count may be determined by the dimensionality of the input data. This layer is followed by several hidden layers with a given number of neurons and activation functions. These layers and neurons define the network's depth and width, while the activation functions may introduce nonlinearity into the model. The output layer may have as many neurons as the variables in the output data. The interconnections between these layers defines the topology of the neural network. The parameters of the neural network are the learnable weights and biases, which are determined in the training process. In contrast, the hyperparameters are pre-defined settings that are not learned from the training data. These data encompasse the number of hidden layers, neurons per layer and much more. To train a neural network, at least two settings may be defined. First, a loss function, which is a metric that measures the error between the training data and the model's prediction, such as the mean square error (MSE). Second, an optimizer, which modifies the model's weights and biases during the training process to minimize the loss function. Each optimizer has its own set of hyperparameters.

The learning method comprises providing a training dataset of training examples.

Each training example comprises a narrow-band Fourier transform based on the sound signals acquired by the microphones of a given microphone module of a vehicle in the presence of background noises and interfering sound sources. Each training example may for example comprise a 3D input structure of size (*N_{c}, N_{b}*, 2*Nₘ*) like the one discussed above, *i.e.* encoding the real and imaginary parts of the narrow-band Fourier transforms for several signals corresponding to several frames (two past frames, one current, and two next frames as above) for each microphone of an array/module of *Nₘ* (*Nₘ* being the same for all training examples), the Fourier transform being distributed over *N_{b}* frequency bins (*N_{b}* being the same for all training examples). As previously discussed, *N_{c}* may equal 5 (and may be edited), *N_{b}* may equal 205 and *Nₘ* may equal 3. In other words, each training example comprises an example of a 3D input structure which corresponds to a group of sound signals acquired by a certain vehicle microphone module in a certain context of background noise and interfering sources (*e.g*. wind noise, vehicle noise, engine noise, road noise, other vehicle noise and/or any other interfering sound). As known *per se* from machine-learning, the training examples are in a sufficient number and variability to cover a sufficient variability of background noises, interfering sources, microphone types and/or vehicle types. The training examples comprise examples which correspond to signals recording a siren sound and other examples which corresponding to signals where there is no siren sound, *i.e*. the training examples comprise a certain number of positive examples (the sounds correspond to the presence of a siren) and negative example (the sounds correspond to absence of a siren). Specifically, the DNN-based model is designed to jointly detect and localize siren sources. This means that the model predicts the likelihood of each azimuth angle (covering 360 azimuth angles) or outputs an all-zero value (360 zeros) in the absence of siren sources. In this case, the method may balance the outputs based on the number of azimuth angles and the probability of a siren source being present. For that, the training dataset, the ratio between positive examples and negative examples may be approximately 3:1, meaning the number of positive examples (distributed across the 360 azimuth angles) is three times that of the negative examples (all-zero outputs).

Each training example also comprises a probability of joint siren signal presence and direction of arrival of a siren sound for the sound signals of the given microphone module, *i.e.* a probability of joint siren signal presence and direction of arrival of a siren sound that corresponds to the input (*e.g*. the 3D input structure) comprised in the training example. The probability is of the same type as the one already discussed above, *i.e*. the probability is zero in the absence of a siren sound and represents a distribution of probabilities across azimuth angles in the presence of a siren sound.

Providing the training dataset may comprise creating the training examples, or at least a part thereof. This may include accessing a database of sound signals comprising signals with a siren sound and signals without, for a various diversity (variety) of vehicles, microphones, background noises and interfering sound sources, and selecting a suitable number and variability of such sounds to serve as training examples. The creation of the dataset may then comprise creating the corresponding 3D input structures (by suitable calculation of the narrow-band Fourier transforms by any known suitable method) and computing (or assigning to them) their corresponding probabilities. Alternatively, providing the training dataset may comprise retrieving (*e.g*. downloading) the training examples (or at least a part thereof) from a (*e.g.* distant) memory or server or database where they have been stored further to their creation.

As outlined earlier, one of the advantages of the DNN model is its flexibility in accommodating different modular configurations and vehicle dimensions. To achieve this, one cannot rely on a dataset recorded using microphones mounted on a specific vehicle. Instead, in implementations, the proposed learning method may be designed to generate, via a simulation model, the audio signals for the microphones of a module based on the module's microphone configuration and the locations of siren sources around it. In this dataset, a wide range of real siren signals (including High-low, Yelp, Wail, Sting, and Mechanical sirens) and background noises (such as wind, engine, road, street, and babble noise) recorded in real environments and public places-sourced from publicly available datasets like Soundfree and Kaggle-are used as inputs to the simulation. The simulation model outputs microphone signals corresponding to various microphone configurations and siren source locations under different SNR conditions. In other words, the flexibility of the DNN-based model enables it to adapt to various modular configurations and vehicle dimensions. To support this adaptability, a simulation model is used to generate microphone signals, eliminating the need for datasets recorded from specific vehicle setups. The simulation utilizes real siren signals and background noises as inputs, sourced from publicly available datasets such as Soundfree and Kaggle. It outputs microphone signals corresponding to different microphone configurations, siren source locations, and varying SNRs. This approach allows for the creation of training data that reflects a wide range of real-world conditions without requiring extensive field recordings.

The learning method then comprises training the DNN. The training is based on the training dataset. The training comprises minimizing a loss. The loss penalizes, for each training example, a disparity between the probability of joint siren signal presence and direction of arrival of a siren sound for the training example and a probability of joint siren signal presence and direction of arrival of a siren sound outputted by the DNN based on a narrow-band Fourier transform of the training example. In other words, for each training example, each training example comprises an example input (*e.g*. an example input 3D structure) and a corresponding example output probability (*i.e.* the ground truth), and the DNN computes its own output probability for the example input, which the DNN takes as input during training. The disparity is a disparity (*e.g.* a difference) between the example output probability (*i.e.* the ground truth) and that probability computed by the DNN for the corresponding example input. The disparity has a high value when the output computed by the DNN is too different from the example output, which increases the value of the loss and thus requires modification of the DNN's weight (or parameters) during training. The loss may be a MSE (mean square error). The loss may be minimized using a gradient backpropagation as known *per se* in machine-learning, for example using an Adam solver/optimizer. The training may comprise a residual learning. This may comprise using residual blocks in the DNN architecture (between the convolutional layers as previously discussed) and applying batch normalization after each layer during the backpropagation process. This improves the training. Indeed, training very deep neural networks presents the challenge of enhancing gradient influence in deeper layers. Batch normalization applied after each layer, and residual learning implemented in bottleneck blocks, improve gradient flow during the backpropagation process. This technique ensures that the DNN trains effectively, even with a deep architecture, by maintaining the stability of gradient magnitudes and enabling the learning of complex features.

The DNN may be trained for directly removing noise (*e.g*. wind noise) and other interferences from the sound-signals it encounters. For that, in the training data, although the input examples may feature noises and interferences, the corresponding output examples may directly correspond to the ground truth outputs for the cleaned input examples, *i.e*. the output for these input signals wind any noise and interference removed. The DNN proposed for joint siren detection and localization may thus inherently separate the target features of siren signals from background noise within its initial convolutional layers. The extracted features may then be processed in the subsequent layers to perform siren detection and localization.

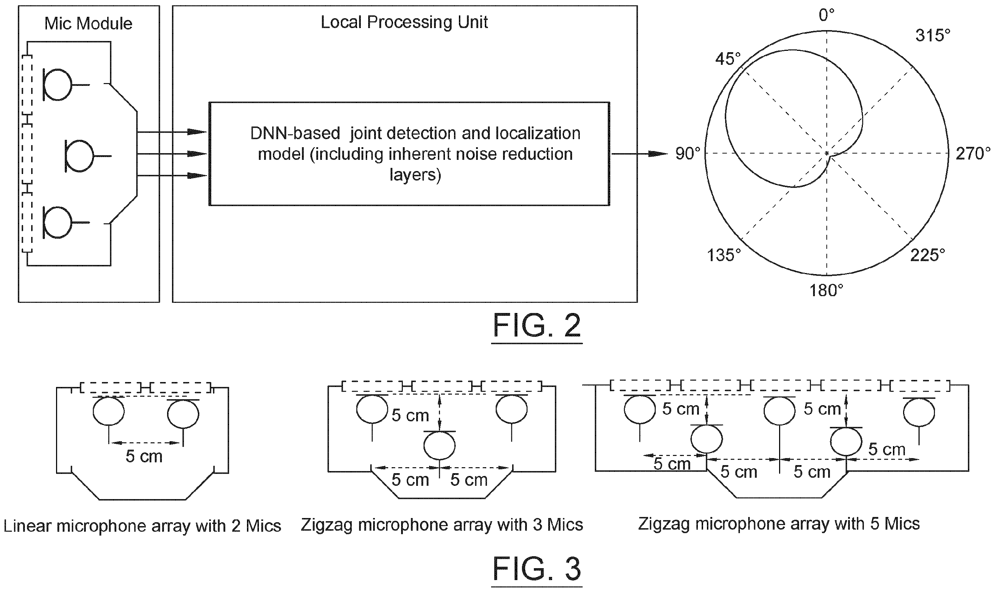

FIG. 2 illustrates a microphone module and local processing unit comprising a DNN-based model for joint siren detection and localization, which inherently removes background noise. As previously said, the DNN is designed to jointly detect and localize siren sources, even under adverse acoustic conditions such as strong background noise and interference. The DNN is trained to output accurate probabilities of siren sources in challenging scenarios, including cases where the signal-to-noise ratio (SNR) is as low as -20 dB. Noise reduction and siren detection/localization are inherently performed together by the DNN within the same process.

FIG. 3 shows examples, which may be contemplated by the present disclosure, of modular configurations of microphone modules across different zones. The Global processing unit (or function) combines Direction of Arrivals (DoAs) provided by different microphone modules to estimate the DoA of siren sources.

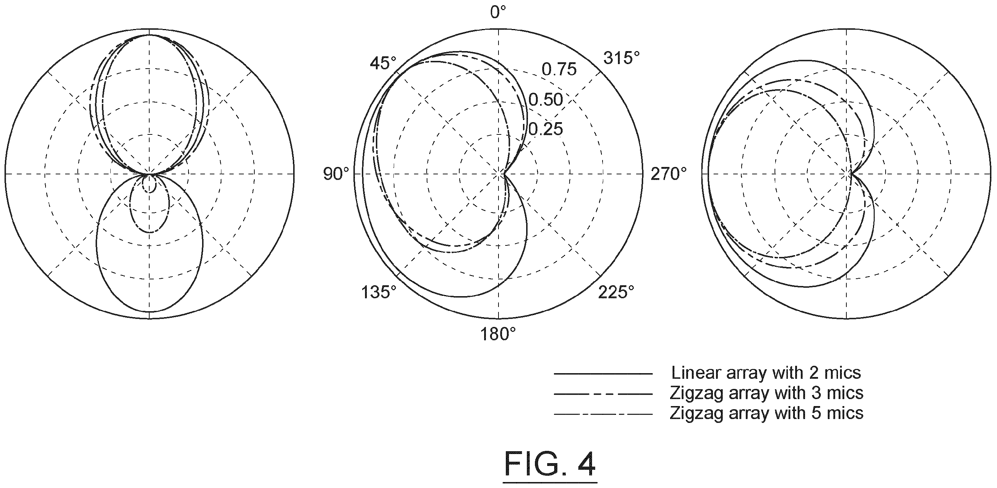

FIG. 4 shows examples of beam patterns in different numbers of microphones in the zigzag array.

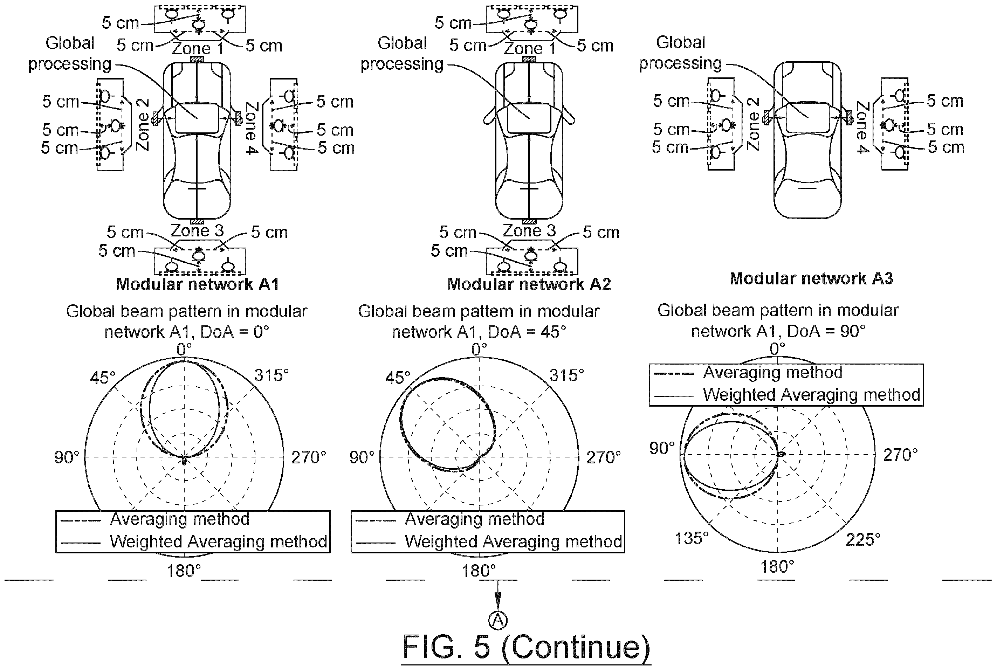

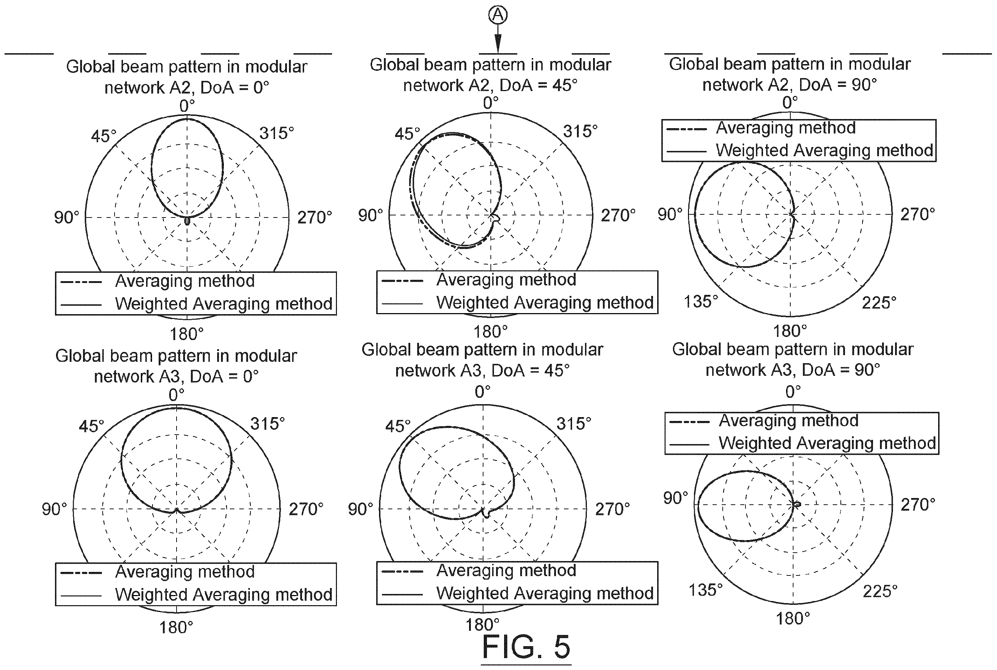

FIG. 5 shows an example of a proposed modular network around a vehicle for DoA estimation which can be contemplated by the proposed methods. The figure also shows examples of the distributions of azimuth probabilities computed with weighting the average the outputs of the local processing function, compared with these distributions without weighting the average.

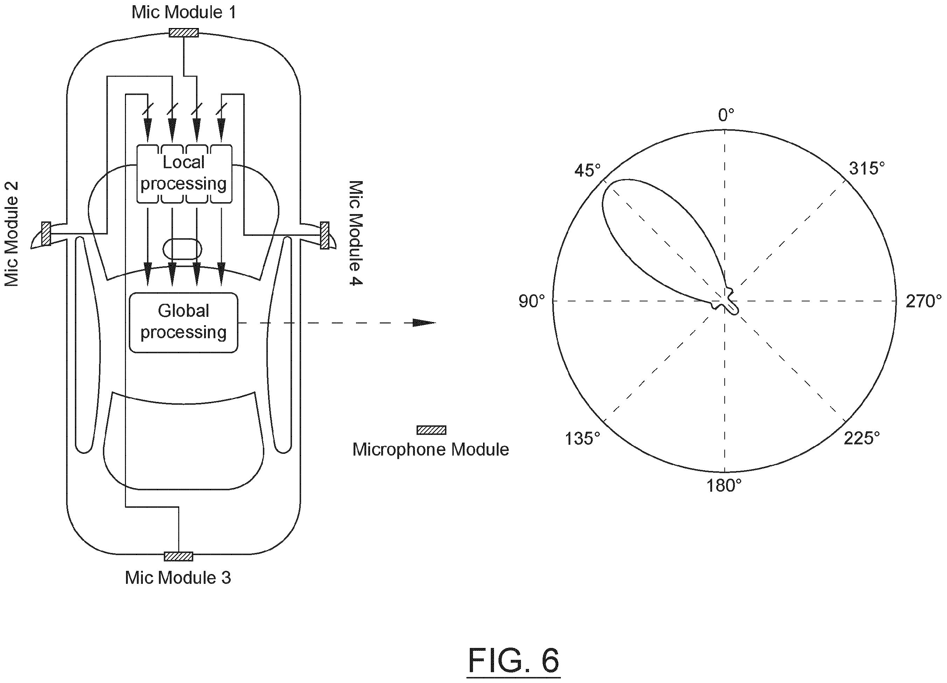

FIG. 6 shows a summary illustration of the methodology proposed by the present disclosure, with a proposed modular configuration across different zones, and the Global processing unit (or function) which combines Direction of Arrivals (DoAs) provided by different microphone modules to estimate the DoA of siren sources.

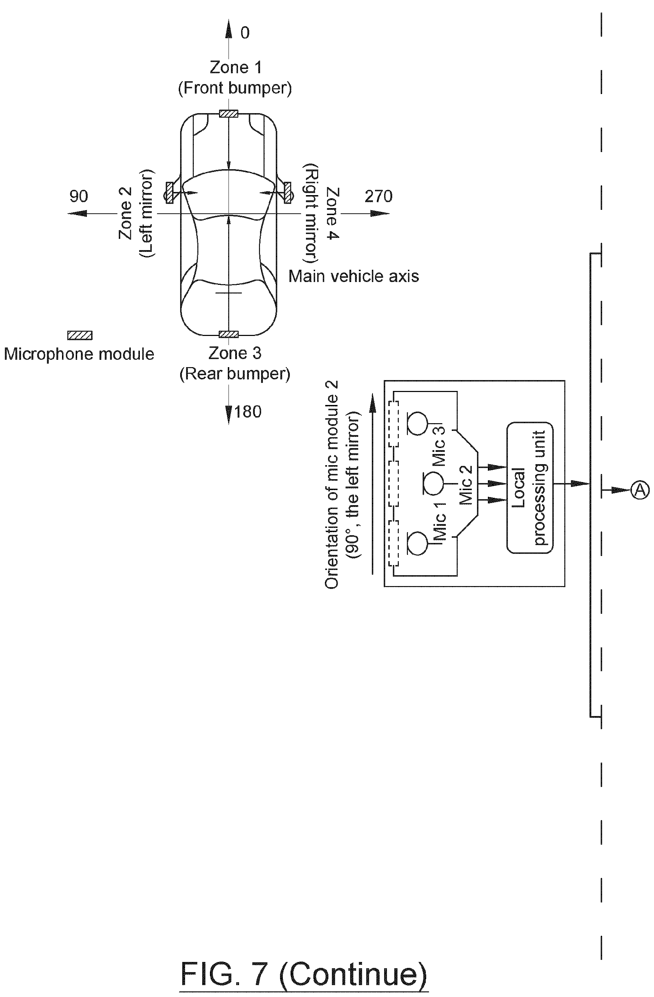

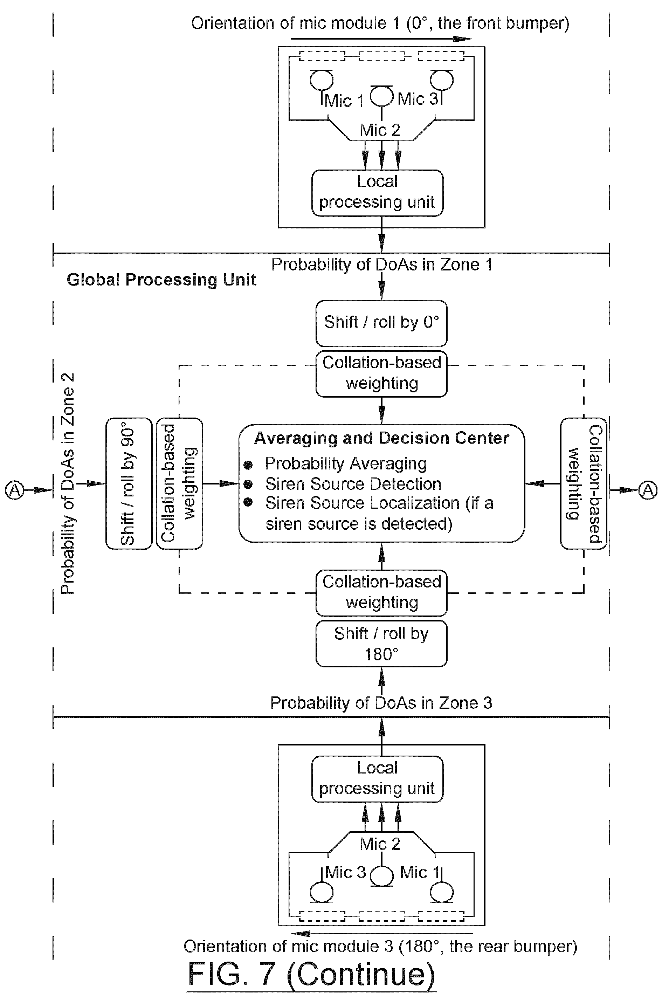

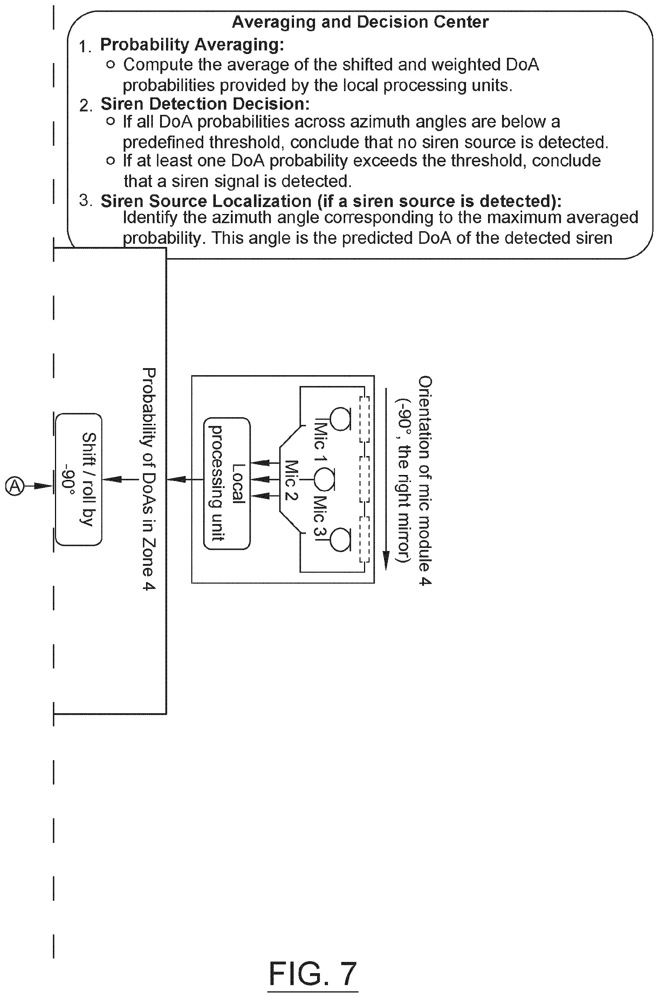

FIG. 7 shows a block diagram illustration of an implementation of the global processing function/unit.

It is also provided a DNN obtainable according to the learning method (i.e. a DNN which can be obtained using the learning method, having the same weights and architecture as a DNN trained by the learning method), for example a DNN obtained according to the learning method (i.e. the exact DNN that results from the learning method, with its weights/parameters set by the training according to the training method.

The methods may be integrated into a same computer-implemented method of sound signal processing which comprises the learning method (offline stage) and then the detection and localization method (online stage).

The methods are computer-implemented. This means that steps (or substantially all the steps) of the methods are executed by at least one computer, or any system alike. Thus, steps of the methods are performed by the computer, possibly fully automatically, or, semi-automatically. In examples, the triggering of at least some of the steps of the methods may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

FIG. 8 shows an example of the system, wherein the system is a client computer system, e.g. a vehicle on-board computer.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen. The computer may also be connected to the microphone modules and thus configured to receive these signals and process them according to the methods (possibly after suitable analog to digital signal conversion).

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program.

Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

1. A computer-implemented method for detecting and localizing sirens based on sound signals each representing a sound acquired at a same time frame by a respective microphone of a vehicle comprising at least two microphone modules each with several microphones, the method comprising:
- for each microphone module, by a local processing function, removing noise in the sound signals acquired by the microphones of the module and performing siren detection and localization based on the sound signals acquired by the microphones of the modules; and
- applying a global processing function to the siren detection and localization results outputted by the local processing function for all microphone modules, the global processing function being configured for siren detection and localization based on the results outputted by the local processing function.

2. The method of claim 1, wherein the local processing function computes, for each microphone module, a probability of joint siren signal presence and direction of arrival of a siren sound based on the sound signals of the microphones of the module, the probability being zero or lower than a predefined threshold in the absence of a siren sound and representing a distribution of probabilities across azimuth angles in the presence of a siren sound.

3. The method of claim 2, wherein the global processing function detects a siren sound and localizes a siren by combining the probabilities of joint signal presence and direction of arrival of a siren sound computed for the microphone modules.

4. The method of claim 3, wherein the global processing function detects and localizes a siren sound by computing an average of the probabilities of joint siren signal presence and direction of arrival of a siren sound computed for the microphone modules.

5. The method of claim 4, wherein:
- the average is a weighted average where each probability of joint siren signal presence and direction of arrival has a weight that depends decreasingly on its amplitude; or
- the average is a weighted average where each probability of joint siren signal presence and direction of arrival has a weight that depends increasingly on its amplitude.

6. The method of any one of claims 2 to 5, wherein, prior to applying the global processing function, the method further comprises adjusting each probability of joint siren signal presence and direction of arrival computed for a respective microphone module based on a position and orientation of the microphone module.

7. The method of any one of claims 2 to 6, wherein the local processing function comprises a Deep Neural Network (DNN) configured to take as input, for a given microphone module, a narrow-band Fourier transform based on the sound signals acquired by the microphones of the given microphone module, and to remove noise in the sound signals of the microphones of the given module and output the probability of joint siren signal presence and direction of arrival of a siren sound.

8. The method of claim 7, wherein the DNN takes as input 3D input structure corresponding to a microphone module and formed by:
- the narrow-band Fourier transforms of the sound signals acquired by the microphones of the module at said same time frame;
- the narrow-band Fourier transforms of the sound signals acquired by the microphones of the module at one or more previous time frames; and
- the narrow-band Fourier transforms of the sound signals acquired by the microphones of the module at one or more next time frames.

9. A computer-implemented method of machine-learning, for training a Deep Neural Network (DNN) according to claim 7 or 8, the DNN being configured to take as input, for a given microphone module, a narrow-band Fourier transform based on the sound signals acquired by the microphones of the given microphone module, and to remove noise in the sound signals of the microphones of the given module and output a probability of joint siren signal presence and direction of arrival of a siren sound, the probability being zero or lower than a threshold in the absence of a siren sound and representing a distribution of probabilities across azimuth angles in the presence of a siren sound, the method comprising:
- providing a training dataset of training examples, each training example comprising:
∘ a narrow-band Fourier transform based on the sound signals acquired by the microphones of a given microphone module of a vehicle in the presence of background noises and interfering sound sources; and
∘ a probability of joint siren signal presence and direction of arrival of a siren sound for the sound signals of the given microphone module, the probability being zero in the absence of a siren sound and representing a distribution of probabilities across azimuth angles in the presence of a siren sound; and
- training the DNN based on the training dataset, the training comprising minimizing a loss which penalizes, for each training example, a disparity between the probability of joint siren signal presence and direction of arrival of a siren sound for the training example and a probability of joint siren signal presence and direction of arrival of a siren sound outputted by the DNN based on a narrow-band Fourier transform of the training example.

10. A Deep Neural Network obtainable according to the method of claim 9.

11. A computer program comprising instructions which, when executed by a computer-system, cause the computer system to perform the method of any one of claims 1 to 8 and/or the method of any one of claim 9.

12. A computer-readable data storage medium having recorded thereon the computer program of claim 11 and/or the Deep Neural Network of claim 10.

13. A computer-system comprising a processor coupled to a memory, the memory having recorded thereon the computer program of claim 11 and/or the Deep Neural Network of claim 10.

14. The computer system of claim 13, wherein the computer system is vehicle on-board computer system coupled with microphones modules of the vehicle.

15. A vehicle equipped with the computer system of claim 14.
